# EUROPÄISCHE PATENTSCHRIFT

(11) **EP 0 473 769 B1**
(45) Veröffentlichungstag und Bekanntmachung des Hinweises auf die Patenterteilung: **08.06.1994**
(21) Anmeldenummer: 91906878.3
(22) Anmeldetag: 26.03.1991
(51) Int. Cl.: B29C 43/08, B29C 31/08, B29C 43/34, B29C 43/18, B29C 67/18, B29L 23/20

(54) **VORRICHTUNG ZUR HERSTELLUNG VON TUBEN**
DEVICE FOR MANUFACTURING TUBES
DISPOSITIF DE FABRICATION DE TUBES

(30) Priorität: 26.03.1990 DE 4009661
(43) Veröffentlichungstag der Anmeldung: 11.03.1992
(73) Patentinhaber: AISA AUTOMATION INDUSTRIELLE SA, CH-1896 Vouvry (CH)
(72) Erfinder: KELLER, Gerhard, CH-1805 Jongny (CH)
(74) Vertreter: Patentanwälte Zellentin & Partner
(86) Internationale Anmeldenummer: EP9100581
(87) Internationale Veröffentlichungsnummer: WO9115349

(56) Entgegenhaltungen:
- EP-A- 175 642
- EP-A- 297 257
- DE-U- 8 801 851
- GB-A- 1 135 863
- US-A- 2 994 107
- US-A- 3 591 896

## Beschreibung

Die Erfindung betrifft eine Vorrichtung zur Herstellung von Tuben aus vorgefertigten, Tubenrohre bildenden, Rohrkörpern durch Pressen eines Tubenkopfes aus einem erwärmten Rohling aus einem Kunststoff unter dessen gleichzeitiger Verbindung mit dem Tubenrohr, mit einem schrittgeschalteten an mehreren in gleichen Abständen voneinander angeordneten Arbeitsstationen stillgesetzten Transportmittel mit mitlaufenden Dornen zur Aufnahme der Rohrkörper und gleichachsig zu den Dornen angeordneten mitlaufenden Matrizen, die gegebenenfalls zentrale Lochstempel aufweisen, wobei die Dorne derart axial beweglich und mit einem Preßstempel zusammenwirkbar angeordnet sind, daß sie in die Matrizen zum Pressen des Tubenkopfes einführbar sind, sowie mit einer Belade- und einer Entladestation und mit einem Extruder und einer Dosiervorrichtung.

Eine derartige Vorrichtung ist aus der EP-175642-Al bekannt. Bei der bekannten Vorrichtung sind sowohl der Dorn als auch die gleichachsig angeordnete Matrize gegeneinander beweglich an einer Führung eines Drehtisches angeordnet. Die Rohrkörper werden mittels einer kegelförmigen Saugtrommel in einen freien Raum zwischen dem Dorn und der Matrize zugeführt und dann auf den Dorn aufgeschoben. Daher muß zwischen dem Dorn und der Matrize ein Zwischenraum vorhanden sein, der mindestens etwas größer als die Länge des Rohrkörpers sein muß. Da Tubenkörper durchaus eine beträchtliche Länge erreichen können, ergeben sich große Abstände, die die Zeiten zum Schließen der Preßform erheblich verlängern. Da die Preßkräfte auch auf die Führungen übertragen werden, müssen diese große Belastungen aushalten und somit besonders steif und aufwendig gestaltet sein. Hierdurch wird die Vorrichtung kompliziert und ist bezüglich der Taktzeiten wegen des großen Schließwegs eingeschränkt. Mit einer derartigen Vorrichtung ist es zudem unmöglich, geschichtete Tubenköpfe herzustellen.

Aus der DE-3816181-Al ist eine ähnliche Anlage zum Herstellen von Tuben aus vorgefertigten Rohrkörpern und Kopfstücken aus thermoplastischem Kunststoff bekannt, bei der jedoch die Dorne gegenüber den Matrizen aus der gleichachsigen senkrechten Stellung in eine waagerechte Stellung, z.B. zum Be- und Entladen der Dorne und damit das Beschicken der Matrizen mit einem Rohling möglich ist, verschwenkbar sind. Bei dieser Anlage sind nicht so große Hubbewegungen notwendig wie bei der zuerst beschriebenen Vorrichtung, jedoch muß hier eine zusätzliche Schwenkbewegung vorgenommen werden, was die Kinematik der Vorrichtung kompliziert macht. Durch Spiel und Verschleiß kann die notendige exakte Ausrichtung sehr bald nicht mehr gegeben sein, so daß Ausschuß produziert wird. Zusätzlich zur axialen Bewegung der Dorne sind auch die Matrizen axial beweglich, was die Vorrichtung komplizierter und störungsanfälliger macht. Um alle diese Bewegungen zu ermöglichen, weist die Anlage einen äußerst komplizierten Aufbau auf.

Aufgabe der Erfindung ist es, eine Vorrichtung der eingangs genannten Art dahingehend zu verbessern, daß sie eine einfache leichte und kompakte aber dennoch stabile Bauart ermöglicht, kurze Bewegungshübe unter Vermeidung von Schwenkbewegungen gewährleistet und hohe Arbeitsgeschwindigkeiten zu erzielen erlaubt.

Diese Aufgabe wird durch eine Vorrichtung mit den Merkmalen des Anspruchs 1 gelöst.

Durch die erfindungsgemäße Lösung kann der Dorn aus der gleichachsigen Arbeitsstellung mit der Matrize aus deren Bereich heraus bewegt werden, wodurch einerseits der Matrize - ungehindert durch einen Dorn - eine Materialportion eines Kunststoffs zugeführt und andererseits der Dorn von unten frei zugänglich ist, so daß ein Rohrkörper ohne durch die Matrize behindert zu werden, aufgeschoben bzw. eine fertige Tube abgezogen werden kann, ohne daß eine Bewegung um eine Drehachse erforderlich ist.

Eine weitere Aufgabe der Erfindung besteht darin, die neue Vorrichtung dahingehend zu gestalten, daß mit ihr auch Tuben mit mehrschichtigem Tubenkopfaufbau bei definierter reproduzierbarer Gestalt der einzelnen Schichten des Tubenkopfes herstellbar sind.

Diese weitere Aufgabe wird durch eine Vorrichtung gemäß dem Anspruch 1 in Kombination mit den Merkmalen des Anspruchs 4 gelöst.

Vorteilhafte Ausgestaltungen der Erfindung sind den Unteransprüchen zu entnehmen.

Nachstehend wird die Erfindung anhand eines Ausführungsbeispiels einer Vorrichtung zur Herstellung von Tuben aus einem vorgefertigtem Rohrkörper mit einem dreischichtigen Tubenkopf unter Bezug auf Zeichnungen näher erläutert. Es zeigt:
- Fig. 1: in schematischer Darstellung den Arbeitsablauf einer erfindungsgemäßen Vorrichtung,
- Fig. 2: einen Schnitt gemäß Pfeilrichtung a in Fig. 1,
- Fig. 3: einen Schnitt gemäß Pfeilrichtung b in Fig. 1,
- Fig. 4: einen Schnitt gemäß Pfeilrichtung c in Fig. 1,
- Fig. 5: eine zusätzliche Matrize mit zugeordnetem Dorn in Ausgangsstellung zur Herstellung der ersten inneren Schicht des Tubenkopfes,
- Fig. 6: dasselbe wie in Fig. 5 in Preßstellung,
- Fig. 7: einen vergrößerten Ausschnitt der Verbindungsstelle der ersten inneren Schicht des Tubenkopfes mit dem Rohrkörper,
- Fig. 8: eine zweite zusätzliche Matrize mit zugeordnetem Dorn zur Herstellung der zweiten mittleren Schicht des Tubenkopfes in Ausgangsstellung,
- Fig. 9: das gleiche wie in Fig. 8 in Preßstellung,
- Fig. 10: einen vergrößerten Ausschnitt der Verbindungsstelle des zweischichtigen Tubenkopfes mit dem Rohrkörper,
- Fig. 11: eine Matrize im Drehtisch mit zugeordnetem Dorn zur Herstellung einer dritten Schicht für den Tubenkopf in Ausgangsstellung,
- Fig. 12: das gleiche wie in Fig. 11 in Preßstellung und
- Fig. 13: einen Ausschnitt der Verbindungsstelle des dreischichtigen Tubenkopfes mit dem Tubenkörper.

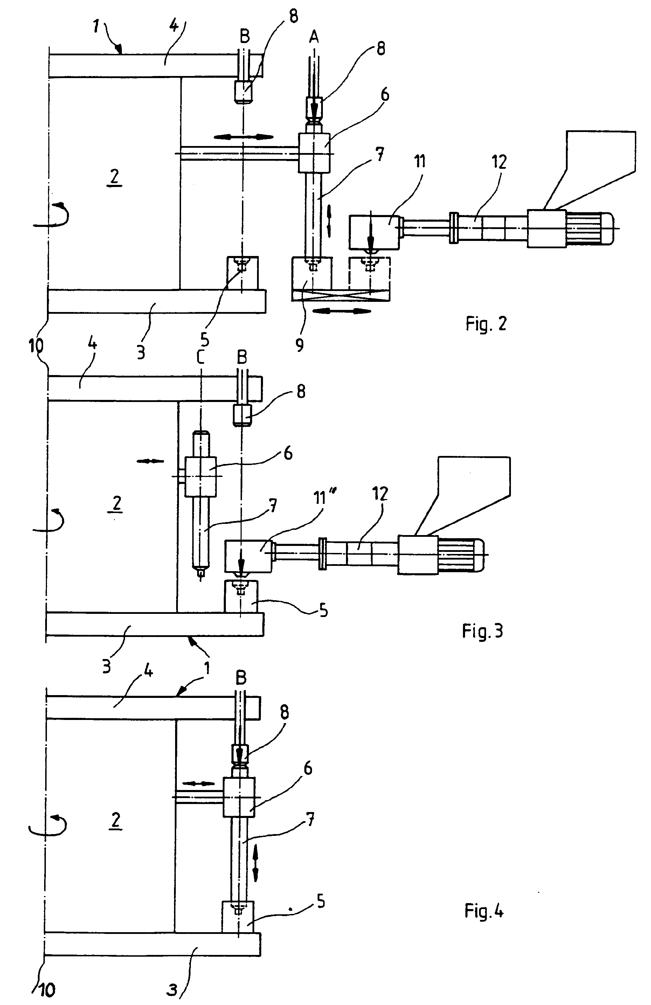

Ein Ausführungsbeispiel der Vorrichtung zur Herstellung von Tuben weist einen Drehtisch 1 (Fig. 2 bis 4) auf. Der Drehtisch 1 weist eine zylindrische Trommel 2 auf und ist durch eine allseitig vorkragende steife untere Platte 3 und eine ebenfalls vorkragende steife obere Platte 4 begrenzt. Im Ausführungsbeispiel sind am Umfang des vorkragenden Rands der unteren Platte 3 acht Matrizen 5 gleichmäßig verteilt fest angeordnet.

Durch die Anzahl der Matrizen 5 werden acht Arbeitsstationen I-VIII vorgegeben. Je nach Bedarf und Größe können auch mehr oder weniger als acht Arbeitsstationen vorgesehen werden, wobei statt eines Drehtisches auch ein anderes schrittgeschaltetes Transportmittel, das neben Kurvenbahnen auch geradlinige Abschnitte aufweisen kann, eingesetzt werden kann.

Die Zentralachsen aller auf einem Kreis angeordneten Matrizen 5 liegen auf einer Umlaufbahn B um die Zentralachse 10 des Drehtisches 1.

Innerhalb der zylindrischen Trommel 2 sind Halter 6 radial und waagerecht verschiebbar angeordnet. Am freien Ende jedes Halters 6 ist in ihm ein vertikaler Dorn 7 axial verschiebbar angeordnet. Mittels seines Halters 6 läßt sich jeder Dorn 7 in drei definierte Stellungen, nämlich auf eine innere Umlaufbahn C, auf die Umlaufbahn B und auf eine äußere Umlaufbahn A bewegen. Befinden sich die Dorne 7 auf der inneren Umlaufbahn C, ist der Zugang zu den Matrizen 5 frei. Befinden sich die Dorne 7 auf der äußeren Umlaufbahn A ragen sie über den Außenrand der unteren Platte 3 hervor, so daß sie von unten unbehindert frei zugänglich sind. Gleichachsig zu jeder Matrize 5 ist in der oberen Platte 4 des Drehtisches 1 eine Presse 8 axial beweglich angeordnet, die dazu dient, einen sich auf der Umlaufbahn B befindlichen Dorn 7 in die Matrize 5 einzuführen. Derartige Pressen 8 sind bekannt und werden daher hier nicht weiter erläutert.

Im Ausführungsbeispiel sind außerhalb des Bereiches des Drehtisches 1 jedoch benachbart dazu zwei zusätzliche Matrizen 9, 9′ vorgesehen. Die zusätzlichen Matrizen 9, 9′ sind auf der Verlängerung der Linie ausgehend von der Zentralachse 10 des Drehtisches 1 durch die Zentralachse einer Matrize 5 außerhalb des Drehtisches 1 auf der äußeren Umlaufbahn A anordenbar. Die zusätzlichen Matrizen 9, 9′ sind derart beweglich angeordnet, daß sich ihre Zentralachsen in einer Endlage gleichachsig zu einem sich auf der äußeren Umlaufbahn A befindlichen Dorn 7 befinden. In ihrer zweiten Endstellung befinden sie sich unter der Ausgabedüse einer Dosiervorrichtung 11, die mit einem Extruder 12 für ein thermoplastisches Kunststoffmaterial verbunden ist. In Fig. 2 ist die in die Stellung unter die Dosiervorrichtung 11 gefahrene zusätzliche Matrize 9 gestrichelt dargestellt.

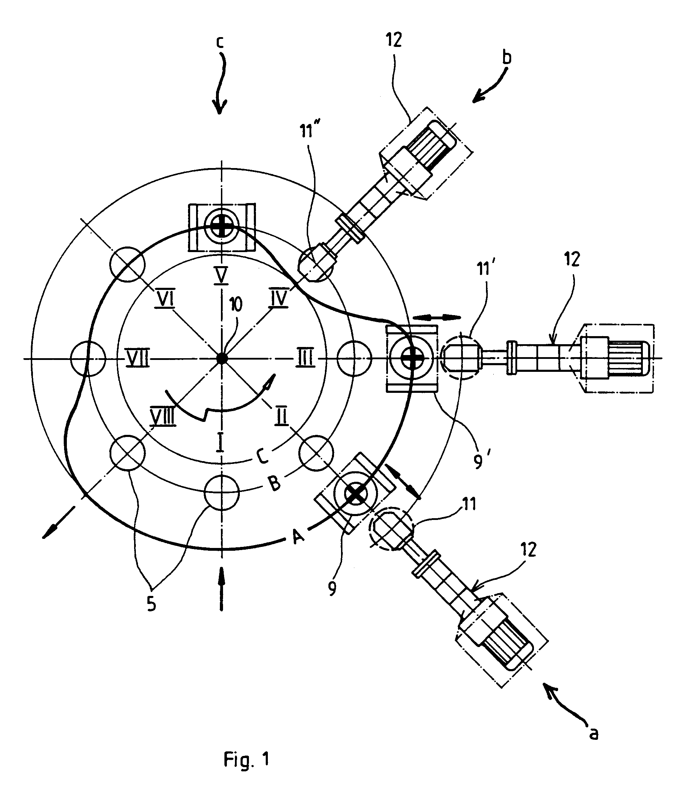

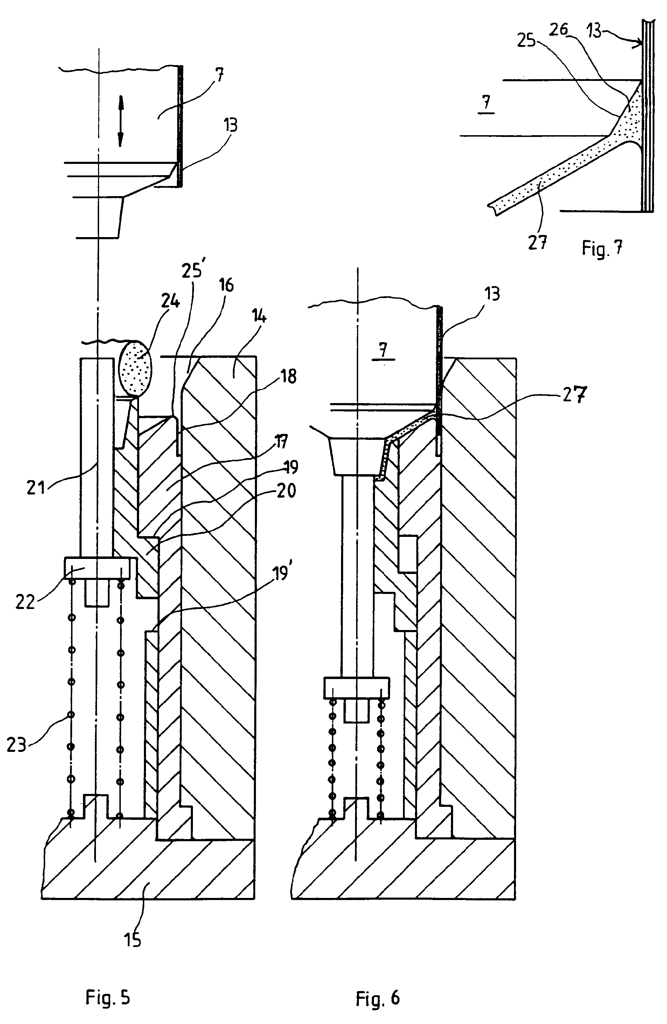

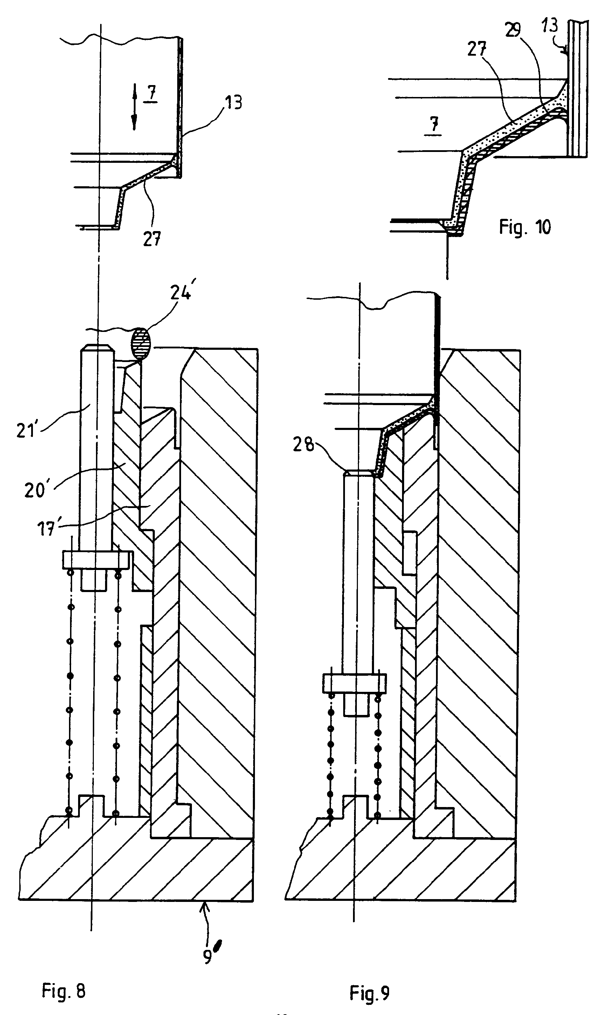

In Fig. 1 ist das Ablaufschema der erfindungsgemäßen Vorrichtung dargestellt. In der Station I ist der Dorn 7 auf die äußere Umlaufbahn A ausgefahren, während seiner Stillstandzeit wird auf ihn ein vorgefertigter Rohrkörper 13 (siehe Fig. 5 bis 13) aufgeschoben. Bei einem Schritt des Drehtisches 1 bewegt sich der Dorn 7 mit dem Rohrkörper 13 auf der Umlaufbahn A weiter und gelangt zur Station II wo er sich beim Stillstand gleichachsig zur zusätzlichen Matrize 9 (Fig. 5) befindet.

Die zusätzliche Matrize 9 (siehe Fig. 5 und 6) weist einen Hohlzylinder 14 auf, der durch eine Bodenplatte 15 unten verschlossen ist. Der Hohlzylinder 14 weist an seinem oberen inneren Ende eine konische Erweiterung 16 auf, die das zentrierte Einführen des Rohrkörpers 13 in den Hohlzylinder 14 beim Absenken mit dem Dorn 7 erleichtern bzw. gewährleisten soll, auch wenn dieser nicht absolut rund ist. Innerhalb des Hohlzylinders 14 ist ein zylindrischer Einsatz 17 angeordnet. Am oberen Ende ist zwischen dem Hohlzylinder 14 und dem Einsatz 17 ein Ringspalt 18 vorgesehen, der das über den Dorn 7 vorragende Ende des Rohrkörpers 13 aufnehmen soll. Um das Einführen des Rohrkörpers 13 in den Ringspalt 18 zu erleichtern, ist die den Ringspalt 18 begrenzende Kante des Einsatzes 17 mit einer Abrundung 25′ versehen, was noch einen weiter unten angeführten Vorteil bedingt. Konzentrisch zum Hohlzylinder 14 und zum Einsatz 17 ist im Einsatz 17 zwischen zwei Anschlägen 19, 19′ ein Zwischenträger 20 axial beweglich angeordnet. Zentral im Zwischenträger 20 ist ein in diesem axial verschiebbarer Lochstempel 21 angeordnet. Der Lochstempel 21 weist am unteren Ende einen ringförmigen Vorsprung 22 auf, der mit einer ringförmigen Bodenfläche des Zwischenträgers 20 in Kontakt treten kann (siehe die Stellung in Fig. 5). Zwischen dem Vorsprung 22 und der Bodenplatte 15 ist eine Feder 23 gespannt angeordnet, die den Lochstempel 21 und damit auch den Zwischenträger 20 in ihren oberen Endlagen (Fig. 5) hält.

Aus der Dosiervorrichtung 11 wurde in der in Fig. 2 gestrichelt dargestellten Stellung der zusätzlichen Matrize 9 ein ringförmiger Rohling 24 (Fig. 5) zugeführt und auf dem Zwischenträger 20 abgelegt, wobei der Rohling 24 durch den Lochstempel 21 zentriert wird.

Sobald der Dorn 7 in der Station II in koaxialer Stellung zur in diese Stellung verschobenen zusätzlichen Matrize 9 mit dem Rohling 24 auf der Umlaufbahn A steht (siehe Fig. 5), wird eine Presse betätigt, die den Dorn 7 in die zusätzliche Matrize 9 absenkt. Das freie Ende jedes Dornes 7 ist so geformt, daß es der Innenform eines gewünschten herzustellenden Tubenkopfes entspricht. Der den Halsteil bildende Vorsprung des Dornes 7 tritt bei seiner Abwärtsbewegung mit dem Lochstempel 21 in Kontakt und bewegt diesen entgegen der Kraft der Feder 23 nach unten. Bei fortschreitender Bewegung nach unten wird auch der Zwischenträger 20 so weit abgesenkt, bis er gegen den unteren Anschlag 19′ stößt. In dieser Stellung (siehe Fig. 6) wird der Rohling 24 zu einer ersten Schicht 27 des herzustellenden Tubenkopfes verpreßt, wobei durch eine Abschrägung 25 (Fig. 7) des Dornes 7 und die Abrundung 25′ am oberen Ende des Einsatzes 17 ein verbreiteter Fuß 26 entsteht, der eine sichere und feste Haftung am Rohrkörper 13 garantiert. Durch die Gestaltung der zum Dorn 7 gerichteten freien Oberflächen des Zwischenträgers 20 und des Einsatzes 17 wird die Form und die Stärke der ersten inneren Schicht 27 des herzustellenden Tubenkopfes im Zusammenwirken mit der Form des Dornes 7 bestimmt. Durch Auswechseln des Zwischenträgers 20 und des Einsatzes 17 kann auf einfache Weise die Form der jeweils herzustellenden Schicht verändert werden.

Nach einer Zeit, die zur Erreichung der Formbeständigkeit der ersten Schicht 27 ausreichend ist, wird der Dorn 7 durch die Presse oder einen anderen Antrieb (nicht dargestellt) in seine Ausgangsstellung zurückgeführt und der Drehtisch 1 schaltet einen Takt weiter, so daß der Dorn 7 mit dem Rohrkörper 13 und der ersten Schicht 27 zur Station III gelangt. In der Station III ist eine weitere zusätzliche Matrize 9′ angeordnet, wobei deren Aufbau und der Funktionsablauf ähnlich wie oben beschrieben sind. Jedoch weist der Lochstempel 21′ der Matrize 9′ einen größeren Durchmesser als der Lochstempel 21 der Matrize 9 bei der Station II auf. Er weist auch ein konisch zulaufendes kegelstumpfartiges Ende 28 oder auch ein gestuftes Ende (nicht dargestellt) auf, das berücksichtigt, daß die erste Schicht 27 aufgrund des Lochstempels 21 mit geringerem Durchmesser eine kleinere Ausgabeöffnung aufweist. Das Ende 28 ist so gestaltet, daß es gerade in die Ausgabeöffnung der ersten Schicht 27 eingehen kann, so daß die Ausgabeöffnung der ersten Schicht 27 vor einem Eindringen von Kunststoffmaterial der zweiten Schicht 29 geschützt ist. Die Oberflächen des Zwischenträgers 20′ und des Einsatzes 17′ sind so gestaltet, daß zwischen dem Dorn 7 mit der ersten Schicht 27 in seiner untersten Endstellung noch ein freier Preßraum zum Herstellen der zweiten Schicht 29 verbleibt. Durch die Vergrößerung des Durchmesser des Lochstempels 21′ weist die zweite Schicht 29 eine größere zentrale Öffnung auf, d.h. die erste Schicht 27 ragt gemäß Fig. 10 geringfügig über die zweite Schicht 29 vor.

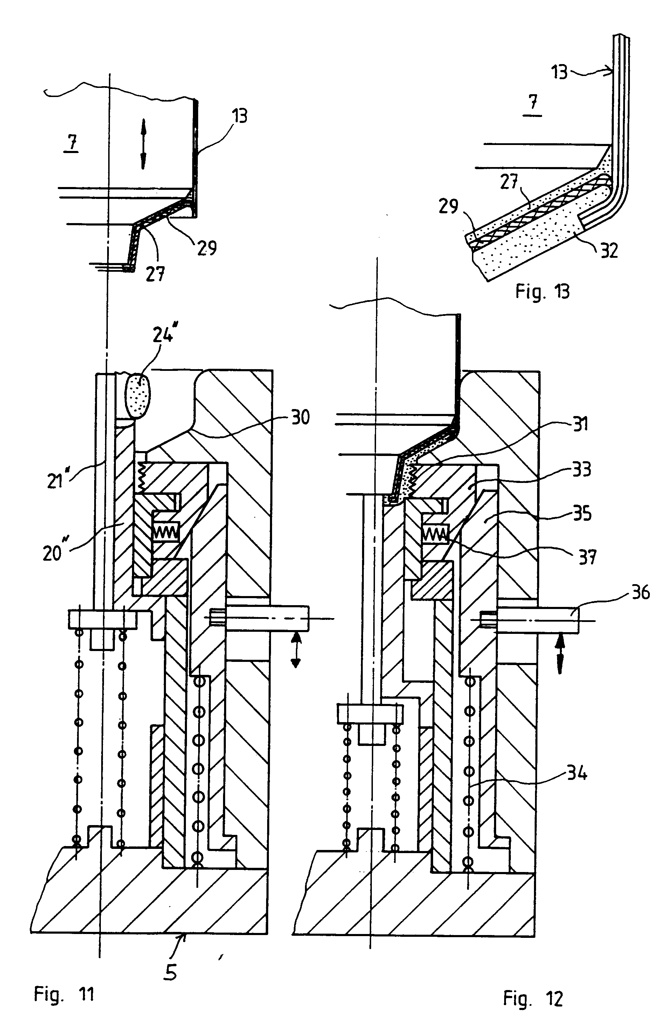

Nach Ablauf der für die Formbeständigkeit notwendigen Preßzeit wird der Dorn 7 mit den nunmehr zwei Schichten 27, 29 in die Ausgangsstellung zurückgefahren, wobei während des nächsten Schrittes des Drehtisches 1 der Halter 6 des Dornes 7 so eingefahren wird, daß sein Dorn 7 sich an der nächsten Station IV auf der inneren Umlaufbahn C befindet. An der Station IV ist im Ausführungsbeispiel über der jeweils sich in der Station IV befindenden Matrize 5 des Drehtisches 1 eine Dosiervorrichtung 11˝ eines Extruders 12 stationär angeordnet. Die Matrizen 5 im Drehtisch 1 sind in Fig. 11 und 12 dargestellt und entsprechen in wesentlichen Teilen den zusätzlichen Matrizen 9, 9′. Die Matrizen 5 weisen jedoch keinen Ringspalt 18 sondern eine Abrundung 30 auf, die dazu dient, das freie Ende des Rohrkörpers 13 nach innen zu biegen bzw. zu wölben, wie das im Endergebnis besonders gut aus Fig. 13 zu sehen ist. Die Matrize 5 weist auch einen Formteil auf, der zum Ausformen des Außengewindes 31 am Tubenhals während der Herstellung der dritten Schicht 32 des Tubenkopfes dient. Hierzu weist die Matrize 5 gegenüber den zusätzlichen Matrizen 9 noch mindestens zwei radial verstellbare Gewindebacken 33 (Fig. 12) auf. Die Gewindebacken 33 werden durch eine Feder 34 mittels einer axial verschiebbaren Hülse 35 in geschlossener Stellung gehalten. Vorzugsweise weisen die Hülse 35 und die Gewindebacken konische Gleitflächen auf. Die Hülse 35 ist mit einem in einem Langloch aus der Matrize 5 herausgeführten Bolzen 36 verbunden. Durch einen nicht dargestellten Mechanismus kann mittels des Bolzen 36 die Hülse 35 entgegen der Kraft der Feder 34 axial nach unten bewegt werden, wodurch die Gewindebacken freigegeben werden und sich auf Grund von vorgespannten Federn 37 radial nach außen bewegen und so das hergestellte Gewinde 31 freigeben.

In Station IV (siehe Fig. 3) wird lediglich ein Rohling 24˝ auf den Zwischenträger 20˝ der Matrize 5 abgelegt. Beim nächsten Schritt wird diese beschickte Matrize 5 der Station V (siehe Fig. 4 und 11) zugeführt, wobei der Dorn 7 von der Umlaufbahn C auf die Umlaufbahn B geführt wird. In dieser Position erfolgt das Absenken des Dorns 7 durch die Presse 8 zur Bildung der dritten äußeren Schicht 32, durch die die äußere Kontur des Tubenkopfes mit dem gleichmäßigen Übergang in das umgebogene Ende des Rohrkörpers gestaltet wird. Der Lochstempel 21˝ der Matrize 5 weist den geringsten Durchmesser auf, so daß Material der dritten Schicht seitlich des Lochstempels 21˝ bis zum Dorn 7 vordringen kann und so die Ausgabeöffnungen sowohl der zweiten als auch der ersten Schicht abdecken kann. Die dritte Schicht 32, die auch das Gewinde 31 trägt, wird in der Regel etwas stärker ausgeführt, so daß die Station VI oder gegebenfalls auch VII als Kühlstation vorgesehen sein kann. Bei der Schrittschaltung von Station VII zur Station VIII wird der Dorn 7 von der mittleren Umlaufbahn B wieder auf die äußere Umlaufbahn A geführt, so daß er an der Station VIII außerhalb des Drehtisches 1 von der fertigen Tube entladen werden kann.

In Abwandlung der erfindungsgemäßen Vorrichtung kann diese lediglich zwei Umlaufbahnen aufweisen, wenn das Be- und Entladen beispielsweise durch den Drehtisch hindurch erfolgt und lediglich eine Schicht für den Tubenkopf vorgesehen werden soll. Entsprechendes gilt, wenn statt einer stationären Dosiervorrichtung eine verschiebbare Dosiervorrichtung eingesetzt wird, die in eine Position über die feststehenden Matrizen führbar ist. Es ist auch möglich, die Dorne nicht erst nach der Station VII auf die äußere Umlaufbahn B zu führen, sondern schon davor, so daß an der Station VII beispielsweise eine Kappe aufschraubbar ist. Die Vorrichtung erlaubt es auch, Tubenköpfe mit mehr (unter Einsatz weiterer zusätzlicher Matrizen) oder weniger als drei Schichten herzustellen und ist dadurch vielseitig anwendbar.

Der dreischichtige Aufbau gemäß dem Ausführungsbeispiel hat den Vorteil, daß als mittlere Schicht eine sogenannte Barriereschicht vorgesehen sei kann, die oftmals nicht mit den Inhaltstoffen der Tube in Berührung kommen soll, also abgedeckt werden muß, was durch die unterschiedlichen Lochstempeldurchmesser - wie oben beschrieben - auf einfache Weise möglich ist. Durch die Abrundung 25′ am vorspringenden Ende des Einsatzes 17 und die Abschrägung 25 am Dorn 7 entsteht eine Materialverbreiterung als Fuß 26, die auch bewirkt, daß der Rand der zweiten Schicht 29 in etwa rechtwinklig gegen den Rohrkörper 13 abgebogen (s. Fig. 10 und 13) gestaltet werden kann.

Die Matrizen 5 und die zusätzlichen Matrizen 9, 9′ können auch anders gestaltet sein, wobei lediglich alle zusätzlichen Matrizen 9, 9′ einen Ringspalt 18 aufweisen müssen. Beispielsweise kann bei allen Matrizen auch der Zwischenträger 20 und wenigstens bei einer Matrize auch der Lochstempel 21 entfallen, letzteres sofern eine oder mehrere Schichten als Membran die Ausgabeöffnung verschließen sollen.

Zum Antrieb des Drehtisches 1 und zur Steuerung der Dornbewegungen sowie der Bewegungen der Pressen 8 sind beliebige bekannte Antriebe und Steuerungen, z.B.

Kurvensteuerungen einsetzbar, so daß diese hier nicht näher erläutert werden. Die Fig. 2 gibt einen Schnitt wieder, wie er der Situation an den Stationen II und III, die Fig. 3 wie er der Situation an der Station IV und die Fig. 4 wie er der Situation an den Stationen V, VI und VII gemäß Fig. 1 entspricht.

Die erfindungsgemäße Vorrichtung weist einen einfachen Aufbau auf, ist vielseitig variierbar und somit leicht an unterschiedliche Verfahrensabläufe und Tubengestaltungen insbesondere hinsichtlich des Tubenkopfes anpaßbar, wobei die Dorne nur kurze lineare Eigenbewegungen ausführen, so daß hohe Arbeitsgeschwindigkeiten möglich sind.

Um die Darstellung nicht zu komplizieren, sind einzelne Dorne an den Stationen des Drehtisches dargestellt, denen entsprechend einzelne Matrizen und Stempel zugeordnet sind. Zur Erhöhung des Ausstoßes pro Zeiteinheit können aber auch jeweils zwei, drei oder auch mehr Dorne vorgesehen sein, denen eine entsprechende Anzahl Stempel und Matrizen derart zugeordnet sind, daß an jeder Station zwei, drei oder mehr Bearbeitungen gleichzeitig erfolgen.

## Patentansprüche

1. Vorrichtung zur Herstellung von Tuben aus vorgefertigten, Tubenrohre bildenden, Rohrkörpern (13) durch Pressen eines Tubenkopfes aus einem erwärmten Rohling (24) aus einem Kunststoff unter dessen gleichzeitiger Verbindung mit dem Tubenrohr (13), mit einem schrittgeschalteten an mehreren in gleichen Abständen voneinander angeordneten Arbeitsstationen (II - VII) stillgesetzten Transportmittel mit mitlaufenden Dornen (7) zur Aufnahme der Rohrkörper (13) und gleichachsig zu den Dornen (7) angeordneten mitlaufenden Matrizen (5), die gegebenenfalls Lochstempel (21˝) aufweisen, wobei die Dorne (7) derart axial beweglich und mit einer Presse (8) zusammenwirkbar angeordnet sind, daß sie in die Matrizen (5) zum Pressen des Tubenkopfes einführbar sind, sowie mit einer Belade- und einer Entladestation (I, VIII) und mit einem Extruder (12) und einer Dosiervorrichtung (11), **dadurch gekennzeichnet,** daß die Dorne (7) zusätzlich aus der gleichachsigen Lage zu den Matrizen (5) in dazu parallele Stellungen verschiebbar sind.

2. Vorrichtung nach Anspruch 1, **dadurch gekennzeichnet,** daß die Dorne (7) auf mindestens eine innere und/oder eine äußere, sich außerhalb des Transportmittels befindende, zur Umlaufbahn (B) der Matrizen (5) parallele zusätzliche Umlaufbahn (A, C) verschiebbar sind.

3. Vorrichtung nach Anspruch 2, **dadurch gekennzeichnet,** daß die Belade- und Entladestationen (I, VIII) der äußeren zusätzlichen Umlaufbahn (A) der Dorne (7) zugeordnet sind.

4. Vorrichtung nach einem der Ansprüche 2 oder 3 zur Herstellung von Tuben mit einem Tubenkopf aus mindestens zwei Schichten, **dadurch gekennzeichnet,** daß den Dornen (7) auf ihrer äußeren Umlaufbahn (A) mindestens eine zusätzliche Matrize (9, 9′) zugeordnet ist.

5. Vorrichtung nach einem der Ansprüche 1 bis 4, **dadurch** **gekennzeichnet,** daß die Matrizen (5) selbst unbeweglich am Transportmittel befestigt sind.

6. Vorrichtung nach Anspruch 4 oder 5, **dadurch** **gekennzeichnet,** daß die zusätzlichen Matrizen (9, 9′) von der äußeren Umlaufbahn (A) der Dorne (7) weg unter eine zusätzliche Dosiervorrichtung (11,11′) eines Extruders (12 ) ausfahrbar sind.

7. Vorrichtung nach einem der Ansprüche 4 bis 6, **dadurch** **gekennzeichnet,** daß die zusätzlichen Matrizen (9, 9′) einen Ringspalt (18) zur Aufnahme eines Endes des Rohrkörpers (13) aufweisen.

8. Vorrichtung nach Anspruch 7, **dadurch gekennzeichnet,** daß die innere obere Kante des Ringspalts (18) eine Abrundung (25′) aufweist.

9. Vorrichtung nach Anspruch 7 oder 8, **dadurch** **gekennzeichnet,** daß die äußere obere Kante des Ringspaltes (18) eine konische Erweiterung (16) aufweist.

10. Vorrichtung nach einem der Ansprüche 1 bis 9, **dadurch** **gekennzeichnet,** daß jede Matrize (5, 9, 9′) einen axial beweglichen Zwischenträger (20, 20′, 20˝) aufweist, in dem zentral der Lochstempel (21, 21′, 21˝) axial beweglich und abgefedert angeordnet ist.

11. Vorrichtung nach Anspruch 10, **dadurch gekennzeichnet,** daß die axiale Bewegung des Zwischenträgers (20, 20′, 20˝) durch Anschläge (19, 19′) begrenzt ist.

12. Vorrichtung nach Anspruch 10 oder 11, **dadurch** **gekennzeichnet,** daß der Lochstempel (21˝) der in Arbeitsabfolge letzten Matrize (5) einen geringeren Durchmesser als alle anderen Lochstempel (21, 21′) aufweist, die in Arbeitsabfolge vorher angeordneten Matrizen (9, 9′) zugehören.

## Claims

1. Apparatus for the manufacture of tubes from prefabricated tubular bodies (13) forming tubular pipes, by pressing a tube head from a heated blank (24) of synthetic material with its simultaneous connection to the tubular pipe (13), with conveying means operated step-by-step and which are stopped at a plurality of working stations (II-VII) disposed at equal distances apart, the conveying means having travelling mandrels (7) for receiving the tubular bodies (13) and travelling dies (5) arranged coaxially with the mandrels (7), which dies (5) possibly have punctures (21˝), the mandrels (7) being arranged to move axially and to cooperate with a press (8) so that they can be introduced into the dies (5) put for pressing of the tube head, and with a loading and unloading station (I, VIII) and with an extruder (12) and a dosing apparatus (11), characterized in that the mandrels (7) are additionally displaceable from the position coaxial with the dies (5) into positions parallel thereto.

2. Apparatus according to Claim 1, characterized in that the mandrels (7) are displaceable on at least one inner and/or one outer, additional circular path (A, C) located outside the conveying means and parallel to the circular path (B) of the dies (5).

3. Apparatus according to Claim 2, characterized in that the loading and unloading stations (I, VIII) are associated with the outer additional circular path (A) of the mandrels (7).

4. Apparatus according to one of Claims 2 or 3 for the manufacture of tubes with a tube head consisting of at least two layers, characterized in that associated with the mandrels (7) on their outer circular path (A) is at least one additioal die (9, 9′).

5. Apparatus according to one of Claims 1 to 4, characterized in that the dies (5) themselves are fixed in a stationary manner to the conveying means.

6. Apparatus according to Claim 4 or 5, characterized in that the additional dies (9, 9′) can be moved out away from the outer circular path (A) of the mandrels (7) below an additional dosing device (11, 11′) of an extruder (12, 12′).

7. Apparatus according to one of Claims 4 to 6, characterized in that the additional dies (9, 9′) have an annular gap (18) for receiving one end of the tubular body (13).

8. Apparatus according to Claim 7, characterized in that the inner upper edge of the annular gap (18) has a rounded portion (25′).

9. Apparatus according to Claim 7 or 8, characterized in that the outer upper edge of the annular gap (18) has a conical enlargement (16).

10. Apparatus according to one of Claims 4 to 9, characterized in that each die (5, 9, 9′) has an axially movable intermediate support (20, 20′, 20˝), in which the punch (21, 21′, 21˝) is arranged to move axially and in a spring-mounted manner centrally therein.

11. Apparatus according to Claim 10, characterized in that the axial movement of the intermediate support (20, 20′, 20˝) is limited by stops (19, 19′).

12. Apparatus according to Claim 10 or 11, characterized in that the punch (21˝) of the last die (5) in the working sequence has a smaller diameter than all the other punches (21, 21′), which are associated with dies (9, 9′) arranged beforehand in the working sequence.

## Revendications

1. Dispositif pour la fabrication de tubes à partir de corps tubulaires préfabriqués (13) définissant des tuyaux tubulaires, par compression d'une tête de tube à partir d'une ébauche (24) en matière plastique chauffée, et par liaison simultanée avec le tuyau (13), comportant un moyen de transport qui fonctionne pas à pas, qui s'arrête à plusieurs postes de travail (II-VII) disposés à intervalles réguliers et qui comporte des mandrins entraînés (7) destinés à recevoir les corps tubulaires (13), ainsi que des matrices entraînées (5) disposées suivant le même axe que les mandrins (7) et présentant éventuellement des poinçons (21˝), étant précisé que les mandrins (7) sont disposés mobiles axialement et aptes à coopérer avec une presse (8) de manière à pouvoir être introduits dans les matrices (5) en vue de la compression de la tête de tube, et comportant aussi des postes de chargement et de déchargement (I, VIII), une extrudeuse (12) et un dispositif doseur (11), caractérisé en ce que les mandrins (7) sont également aptes à être déplacés de leur position suivant le même axe que les matrices (5) vers des positions parallèles à celles-ci.

2. Dispositif selon la revendication 1, caractérisé en ce que les mandrins (7) sont aptes à être déplacés vers au moins une trajectoire circulaire supplémentaire (A, C) intérieure et/ou extérieure située à l'extérieur du moyen de transport et parallèle à la trajectoire circulaire (B) des matrices (5).

3. Dispositif selon la revendication 2, caractérisé en ce que les postes de chargement et de déchargement (I, VIII) sont associés à la trajectoire circulaire supplémentaire extérieure (A) des mandrins (7).

4. Dispositif selon l'une des revendications 2 ou 3 pour la fabrication de tubes présentant une tête de tube formée d'au moins deux couches, caractérisé en ce qu'au moins une matrice supplémentaire (9, 9′) est associée aux mandrins (7), sur leur trajectoire circulaire extérieure (A).

5. Dispositif selon l'une des revendications 1 à 4, caractérisé en ce que les matrices (5) sont fixées elles-mêmes de façon immobile au moyen de transport.

6. Dispositif selon la revendication 4 ou 5, caractérisé en ce que les matrices supplémentaires (9, 9′) sont aptes à être écartées de la trajectoire extérieure (A) des mandrins (7) pour venir sous un dispositif doseur supplémentaire (11, 11′) d'une extrudeuse (12).

7. Dispositif selon l'une des revendications 4 à 6, caractérisé en ce que les matrices supplémentaires (9, 9′) comportent une fente annulaire (18) pour recevoir une extrémité du corps tubulaire (13).

8. Dispositif selon la revendication 7, caractérisé en ce que le bord supérieur intérieur de la fente annulaire (18) présente une partie arrondie (25′).

9. Dispositif selon la revendication 7 ou 8, caractérisé en ce que le bord supérieur extérieur de la fente annulaire (18) présente un élargissement conique (16).

10. Dispositif selon l'une des revendications 1 à 9, caractérisé en ce que chaque matrice (5, 9, 9′) comporte un support intermédiaire (20, 20′, 20˝) mobile axialement au centre duquel le poinçon (21, 21′, 21˝) est mobile axialement et suspendu sur ressort.

11. Dispositif selon la revendication 10, caractérisé en ce que le mouvement axial du support intermédiaire (20, 20′, 20˝) est limité par des butées (19, 19′).

12. Dispositif selon la revendication 10 ou 11, caractérisé en ce que le poinçon (21′) de la dernière matrice (5) dans la séquence de travail présente un diamètre plus faible que tous les autres poinçons (21, 21′) qui font partie de matrices (9, 9′) disposées en amont, dans la séquence de travail.
